# EUROPEAN PATENT SPECIFICATION

(11) **EP 2 014 453 B1**
(45) Date of publication and mention of the grant of the patent: **06.04.2011**
(21) Application number: 07742268.1
(22) Date of filing: 24.04.2007
(51) Int. Cl.: B29D 30/72, B29D 30/20, B29D 30/30, B60C 13/00, B60C 17/00

(54) **MANUFACTURING METHOD OF PNEUMATIC TIRE, AND PNEUMATIC TIRE**
VERFAHREN ZUR HERSTELLUNG EINES LUFTREIFENS UND LUFTREIFEN
PROCÉDÉ DE PRODUCTION DE BANDAGE PNEUMATIQUE ET BANDAGE PNEUMATIQUE

(30) Priority: 24.04.2006 JP 2006119132
(43) Date of publication of application: 14.01.2009
(73) Proprietor: Bridgestone Corporation, Tokyo 104-8340 (JP)
(72) Inventor: KOBAYASHI, Toshinobu, Kodaira-shi, Tokyo 187-8531 (JP)
(74) Representative: Whalley, Kevin
(86) International application number: PCT/JP2007/058833
(87) International publication number: WO 2007/125908

(56) References cited:
- JP-A- 10 016 509
- JP-A- 2002 028 989
- JP-A- 2005 081 978
- JP-A- 2005 178 764
- JP-A- 2005 306 371
- JP-Y2- 63 043 125
- US-B1- 6 439 283

## Description

### TECHNICAL FIELD

The present invention relates to a manufacturing method of a pneumatic tire to be used as a run-flat tire which can travel a predetermined distance even at the time of an abnormal drop in tire internal pressure, or blowout, and the pneumatic tire.
Priority is claimed on Japanese Patent Application No. 2006-119132, filed April 24, 2006, the content of which is incorporated herein by reference.

### BACKGROUND ART

This type of pneumatic tire includes a pair of right and left bead parts, a tread part arranged outside the bead parts in the radial direction of a tire, and having a tread of the tire, and a pair of right and left sidewall parts connecting both ends of the tread part in the width direction and the bead parts, as disclosed in the following Patent Documents 1 and 2. In this type of tire, a carcass layer which extends in a toroidal shape between bead cores buried in the pair of right and left bead parts, respectively, are provided inside the bead parts, the sidewall parts, and the tread part over these respective parts. Further, a belt layer is provided between a crown portion of the carcass layer and the tread, and a reinforcing rubber having a crescent cross-section is provided at the inside of the carcass layer in the width direction of the tire in each of the pair of right and left sidewall parts. Tires of this form are shown in JP 2005306371 WO2005/113260 A1 and JP 2005 081 978.
In this pneumatic tire, there is a demand for an improvement in run-flat durability, i.e., for increasing the distance that the tire can travel even at the time of an abnormal drop in tire internal pressure, or blowout. As a means for improving such run-flat durability, it is considered that the rigidity of the sidewall parts against deformation directed to the outside in the width direction of the tire is enhanced by increasing the thickness of the reinforcing rubber layer. However, in this case, as the thickness of the reinforcing rubber layer becomes large in the pneumatic tire, variations in this thickness become large. As a result, uniformity of the tire may get worse, and comfortable riding may be hindered.
Thus, in recent years, as a means for improving run-flat durability while maintaining comfortable riding, as shown, as disclosed in, for example, in the following Patent Documents 1 and 2, it is known that reinforcing rubber which constitutes the reinforcing rubber layer in the pneumatic tire is formed to have laminated structure, and thereby, the thickness of the whole reinforcing rubber is made larger than the conventional reinforcing rubber as well as the thickness of each reinforcing rubber sheet which constitutes the reinforcing rubber is smaller than the conventional one. Moreover, it is described in these Patent Documents 1 and 2 that, in order to make such operational effects exhibited surely, the cross-sectional area of reinforcing rubber sheet which constitutes the reinforcing rubber is varied in every reinforcing rubber sheet.
Patent Document 1: JP-A-62-279107
Patent Document 2: JP-A-1-278806

### DISCLOSURE OF THE INVENTION

### Problems that the Invention is to Solve

However, in the conventional pneumatic tire, the cross-sectional area is varied in every reinforcing rubber sheet which constitutes the reinforcing rubber having the laminated structure. Therefore, a plurality of dies for forming these reinforcing rubber sheets were needed, and as a result, the manufacturing cost may have been increased.
Thus, instead of such a means, a means which forms a thick reinforcing rubber sheet using one type of die, and sequentially bonding a plurality of reinforcing rubber sheets obtained by cutting this reinforcing rubber sheet short onto a forming drum so as to extend in the peripheral direction of the drum while the longitudinal ends of these reinforcing rubber sheets are jointed is considered. In this method, a reinforcing rubber in which a plurality of joint portions are arranged at almost equal intervals in the peripheral direction of the forming drum is formed. In this case, even if the die for forming a reinforcing rubber sheet is one type, a pneumatic tire with improved run-flat durability without hindering comfortable riding can be formed. On the other hand, a lot of time is taken for forming. As a result, the manufacturing cost is also increased.

This invention has been made in consideration of such a situation, and the object thereof is to provide a manufacturing method of a pneumatic tire capable of forming a pneumatic tire with improved run-flat durability without hindering comfortable riding while hindrances to manufacture are minimized, and the pneumatic tire.

### Means for Solving the Problems

The invention has been made in order to achieve such an object, and relates to a manufacturing method of a pneumatic tire including a pair of right and left bead parts, a tread part arranged outside the bead parts in the radial direction of a tire, and having a tread of the tire, and a pair of right and left sidewall parts connecting both ends of the tread part in the width direction and the bead parts, a carcass layer which extends in a toroidal shape between bead cores buried in the pair of right and left bead parts, respectively, being provided inside the bead parts, the sidewall parts, and the tread part over these respective parts, a belt layer being provided between a crown portion of the carcass layer, and the tread, and a reinforcing rubber having a crescent cross-section being provided at the inside of the carcass layer in the width direction of a tire in each of the pair of right and left sidewall parts. Reinforcing rubber which constitutes a reinforcing rubber layer in this pneumatic tire is formed by winding a plurality of beltlike reinforcing rubber sheets composed of the same rubber material adapted to have almost the same cross-sectional area and cross-sectional shape around a forming drum over its entire periphery while being shifted in the axial direction of the forming drum such that at least portions thereof in the width direction overlap each other over the whole periphery of the forming drum and by separately jointing both longitudinal ends of the respective reinforcing rubber sheets.

In this invention, the reinforcing rubber which constitutes the reinforcing rubber layer in the pneumatic tire is formed by winding a plurality of beltlike reinforcing rubber sheets onto the forming drum. Accordingly, as well as the thickness of each reinforcing rubber sheet which constitutes this reinforcing rubber can be made smaller than the thickness of a conventional reinforcing rubber, the thickness of the overlapping portion can be made larger than the thickness of the conventional reinforcing rubber. As a result, run-flat durability can be improved, without hindering comfortable riding.
Moreover, since the plurality reinforcing rubber sheets which constitute the reinforcing rubber have almost the same cross-sectional area and cross-sectional shape, it is possible to mold these reinforcing rubber sheets under the same extruding conditions, using the same mouthpiece. As a result, an increase in manufacturing cost can be suppressed.
From above, the pneumatic tire with improved run-flat durability without hindering comfortable riding can be formed while hindrances to manufacture are minimized.
Further, the reinforcing rubber is formed by winding the respective reinforcing rubber sheets onto the forming drum over its entire periphery, and jointing both longitudinal ends in the respective reinforcing rubber sheets. Thus, an increase in the time for forming the reinforcing rubber can be suppressed.

Here, the plurality of reinforcing rubber sheets may be wound around the forming drum such that joint portions in the respective reinforcing rubber sheets are shifted uniformly in the peripheral direction of the forming drum in the reinforcing rubber constituted by the reinforcing rubber sheets.

In this case, in each reinforcing rubber, the joint portions are shifted uniformly in the peripheral direction of the forming drum. Thus, as well as the thickness of the reinforcing rubber sheets can be made smaller than the thickness of a conventional reinforcing rubber, uniformity can be surely kept from deteriorating. As a result, hindrance of comfortable riding can be further suppressed.
In addition, in the one pair of right and left reinforcing rubbers, it is desirable from the viewpoint of comfortable riding that the joint portions are arranged in the same position in the peripheral direction of a tire. However, from the viewpoint of manufacture efficiency, the positional deviation of about 2% with respect to the peripheral length of the tire may be caused in the peripheral direction of the tire.

Further, a plurality of ridges may be formed at least in the overlapping portion in the reinforcing rubber sheets.

In this case, when a plurality of a plurality of reinforcing rubber sheets are made to overlap each other and are jointed together, it is possible to surely discharge air from between these sheets. As a result, air can be prevented from easily entering the pneumatic tire by splitting a reinforcing rubber to form a plurality of reinforcing rubber sheets.
In addition, it is desirable that the ridges extend in the longitudinal direction of the reinforcing rubber sheets, i.e., in the peripheral direction of the forming drum which is the overlapping direction. In this case, while the overlapping portions are pressed and jointed together, air is sequentially discharged from between the overlapping portions. As a result, occurrence of entering of air can be more surely prevented.

Further, the pneumatic tire of the invention is formed by the above manufacturing method of a pneumatic tire.
Here, the shore A hardness of the reinforcing rubber layer may be 70° or more and 85° or less.

### Advantages of the Invention

According to the invention, the pneumatic tire with improved run-flat durability without hindering comfortable riding can be formed while hindrances to manufacture are minimized.

### BRIEF DESCRIPTION OF THE DRAWINGS

FIG. 1 is a view a drawing showing a portion of a cross-section of a pneumatic tire of a first embodiment related to the invention.
FIG. 2 is a view a drawing showing a portion of a cross-section of a pneumatic tire of a second embodiment related to the invention.

### REFERENCE NUMERALS

10: PNEUMATIC TIRE
11: BEAD PART
11 a: BEAD CORE
12: TREAD PART
12a: TREAD
13: SIDEWALL PART
15: BELT LAYER
16: CARCASS LAYER
16a: CROWN PORTION
17, 26: REINFORCING RUBBER LAYER

### BEST MODE FOR CARRYING OUT THE INVENTION

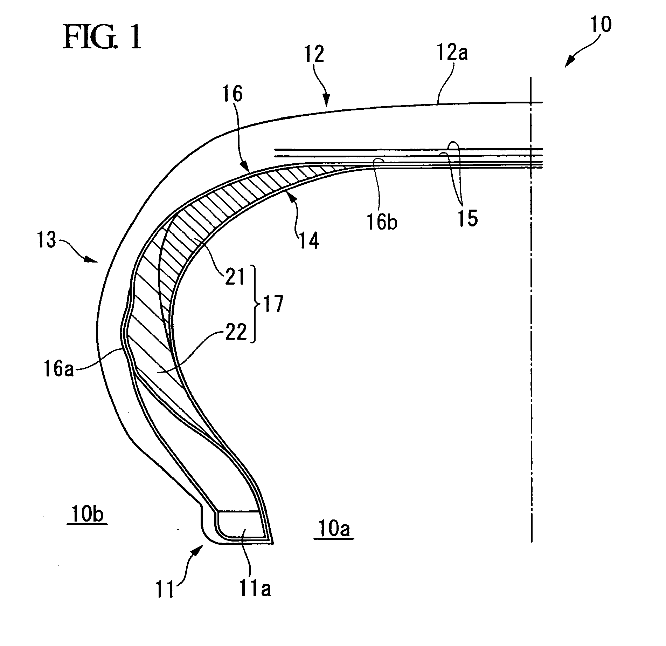

Hereinafter, one embodiment of a pneumatic tire related to this invention will be described, referring to FIG. 1. FIG. 1 shows a portion of a cross-sectional view of a pneumatic tire 10. This pneumatic tire includes a pair of right and left bead parts 11, a tread part 12 arranged outside the bead parts 11 in the radial direction of a tire, and having a tread 12a of the tire, and a pair of right and left sidewall parts 13 connecting both ends of the tread part 12 in the width direction and the bead parts 11. In addition, an inner peripheral surface of the pneumatic tire 10 is constituted by an inner liner 14.

A carcass layer 16 which extends in a toroidal shape between bead cores 11a buried in the pair of right and left bead parts 11, respectively, are provided inside the bead parts 11, the sidewall parts 13, and the tread part 12 over these respective parts. Both ends of the carcass layer 16 in the width direction of the tire constitutes folded ends 16a turned back to outside 10b from inside 10a in the width direction of the tire via the bead cores 11a, respectively. Further, a belt layer 15 is provided between a crown portion 16b of the carcass layer 16 and the tread 12a such that its ends in the width direction are arranged at the ends of the tread part 12 in the width direction.

Moreover, a reinforcing rubber 17 having a crescent cross-section is provided at the inside 10a of the carcass layer 16 in the width direction of the tire in each of the pair of right and left sidewall parts 13. The rigidity against the deflection deformation of the sidewall parts 13 directed to the outside 10b in the width direction of the tire is increased by the reinforcing rubber 17, and a run-flat tire which can travel a predetermined distance even at the time of an abnormal drop in tire internal pressure, or blowout is obtained.

In this embodiment, the reinforcing rubber layer 17 includes a first reinforcing rubber layer 21 arranged outside in the radial direction of the tire, and the second reinforcing rubber layer 22 arranged inside in the radial direction of the tire in the cross-sectional view of the pneumatic tire 10 as shown in FIG. 1. Moreover, an inner end of the first reinforcing rubber layer 21 in the radial direction of the tire and an outer end of the second reinforcing rubber layer 22 in the radial direction of the tire overlap each other.

Further, referring to FIG. 1, the first reinforcing rubber layer 21 is arranged in a portion ranging from the outside of the reinforcing rubber 17 in the radial direction of the tire to a central portion thereof, and the second reinforcing rubber layer 22 is arranged in a portion ranging from the inside of the reinforcing rubber 17 in the radial direction of the tire to the central portion thereof. From above, the central portion of the reinforcing rubber layer 17 in the radial direction of the tire has two-layer structure in which a radial inner end of the first reinforcing rubber layer 21 and a radial outer end of the second reinforcing rubber layer 22 overlap each other, the outside of the reinforcing rubber layer has one-layer structure composed only of the first reinforcing rubber layer 21, and the inside of the reinforcing rubber layer in the radial direction of the tire has one-layer structure composed only of the second reinforcing rubber layer 22.

In addition, in the central portion of the reinforcing rubber layer 17 in the width direction of the tire, the outer end of the second reinforcing rubber layer 22 in the radial direction of the tire is arranged at the outside 10b in the width direction of the tire, and the inner end of the first reinforcing rubber layer 21 in the radial direction of the tire is arranged at the inside 10a in the width direction of the tire. Furthermore, the cross-sectional areas and cross-sectional shapes of the first reinforcing rubber layer 21 and the second reinforcing rubber layer 22 are made almost the same. Moreover, the first and second reinforcing rubber layers 21 and 22 are formed of the same rubber material, and, the shore A hardness of the reinforcing rubber layer 17 is set to 70° or more and 85° or less.

Next, a manufacturing method of the pneumatic tire 10 will be described.
First, an inner liner rubber sheet is wound onto the outer peripheral surface of a first forming drum, which is circular in cross-sectional view, over its entire periphery, and this sheet is made into a cylindrical body. Then, reinforcing rubbers which become the reinforcing rubber layer 17 in the pneumatic tire 10 are formed at both axial ends of the outer peripheral surface of this cylindrical body over its entire periphery.

As for these reinforcing rubbers, first, beltlike first reinforcing rubber sheets are first wound around and pasted to both axial ends of the outer peripheral surface of the cylindrical body over its entire periphery. Then, a beltlike second reinforcing rubber sheet having almost the same cross-sectional area and cross-sectional shape as each of the first reinforcing rubber sheets is shifted axially outward of the cylindrical body (the first forming drum) from the winding position of the first reinforcing rubber sheet and are wound around the outer peripheral surface of the cylindrical body such that its axial inner end in the width direction overlap the axial outer end of the outer peripheral surface of the first reinforcing rubber sheet in the width direction over its entire periphery.
As a result, the reinforcing rubber in which the axial outer end of the first reinforcing rubber sheet in the width direction and the axial inner end of the second reinforcing rubber sheet in the width direction overlap each other over the entire periphery of the first forming drum in the peripheral direction is formed.

Here, in the first and second reinforcing rubber sheets which constitutes each reinforcing rubber, at least one of portions which overlap each other over the entire periphery of the first forming drum in the peripheral direction, i.e., the front face of the axial outer end of the first reinforcing rubber sheet in the width direction, and the rear face of the axial inner end of the second reinforcing rubber sheet in the width direction are formed with a plurality of ridges. As the shape of a cross-section (cross-section which extends in a direction orthogonal to the longitudinal direction of the first and second reinforcing rubber sheets) of each of the ridges, for example, a rectangular shape, a triangular shape, a convex curved surface shape, etc. can be adopted. Moreover, in this embodiment, the ridges extend in a direction in which the first and second reinforcing rubber sheets are wound around the first forming drum, i.e., in the longitudinal direction (peripheral direction of the first forming drum) of the first and second reinforcing rubber sheets which are made beltlike.

Moreover, in this embodiment, the length of the first and second reinforcing rubber sheets is made almost equal to the peripheral length of the outer peripheral surface of the cylindrical body. As for each of the reinforcing rubber sheets, one place becomes a joint portion. Further, in each of the reinforcing rubbers, the joint portion of the first reinforcing rubber sheet and the joint portion of the second reinforcing rubber sheet are shifted by about 180° around the axis in peripheral position in the first forming drum.

That is, the first and second reinforcing rubber sheets which constitute each reinforcing rubber are wound around and pasted to the first forming drum such that the joint portions in the reinforcing rubber sheets are shifted uniformly in the peripheral direction of the first forming drum. Further, the joint portion is arranged in the same position in the peripheral direction of the tire in each of the reinforcing rubbers respectively provided at both axial ends of the outer peripheral surface of the cylindrical body.

Next, a carcass member which is made wider than the inner liner rubber is wound onto the first forming drum to cover the above inner liner rubber and first and second reinforcing rubber sheets (reinforcing rubber). Then, the axial central portion of the reinforcing rubber, the whole inner liner rubber, and the carcass member are increased in diameter, and the bead core 11a buried in an inner peripheral portion of a bead filler is set in a predetermined position of the carcass member.

Then, the carcass member which is more axially outside the bead core 11a is folded back around the bead core 11 a, and sidewall rubber is stuck on an outer periphery of the carcass member, thereby forming a green case.
Next, this green case is pulled out of the first forming drum, and is mounted on the second forming drum. Then, the green case is deformed in a toroidal shape by bringing the bead cores 11a close to each other. Then, a green tire is formed by increasing the diameter of the green case in a state where a BT band composed of a belt member and tread rubber which are formed in a cylindrical shape in advance by other forming drums are advanced into the outside of this green case.

Then, this green tire is loaded into a vulcanizing apparatus, and is vulcanized therein, thereby forming the pneumatic tire 10. As a result, the bead filler and a bead core 11a are made into the bead part 11, the tread rubber is made into the tread part 12, the sidewall rubber is made into the sidewall part 13, the inner liner rubber is made into the inner liner 14, the carcass member is made into the carcass layer 16, the belt member is made into the belt layer 15, the first reinforcing rubber sheet is made into the first reinforcing rubber layer 21, and the second reinforcing rubber sheet is made into the second reinforcing rubber layer 22.

As described above, according to the manufacturing method of a pneumatic tire by this embodiment, the reinforcing rubber which constitutes the reinforcing rubber layer 17 in the pneumatic tire 10 is formed by winding a plurality of beltlike reinforcing rubber sheets onto the first forming drum. Accordingly, as well as the thickness of each reinforcing rubber sheet which constitutes this reinforcing rubber can be made smaller than that of a conventional reinforcing rubber, the thickness of the overlapping portion can be made larger than the that of the conventional reinforcing rubber. As a result, run-flat durability can be improved without hindering comfortable riding.

Moreover, since the first and second reinforcing rubber sheets which constitute the reinforcing rubber have almost the same cross-sectional area and cross-sectional shape, it is possible to form these reinforcing rubber sheets under the same extruding conditions, using the same die. As a result, an increase in manufacturing cost can be suppressed.
From above, the pneumatic tire 10 with improved run-flat durability without hindering comfortable riding can be formed while hindrances to manufacture are minimized.

Further, in this embodiment, the reinforcing rubber is formed by winding the first and second reinforcing rubber sheets onto the first forming drum over its entire periphery, and bonding together both longitudinal ends in the reinforcing rubber sheets, and one place becomes a joint portion in each of the first and second reinforcing rubber sheet. Thus, an increase in this forming time can be suppressed.

Moreover, in each reinforcing rubber, the joint portions of the first and second reinforcing rubber sheets are shifted uniformly in the peripheral direction of the first forming drum. Thus, as well as the thickness of the first and second reinforcing rubber sheets can be made smaller than the thickness of a conventional reinforcing rubber, uniformity can be surely kept from deterioration . As a result, hindrance of comfortable riding can be further suppressed.

Further, in the first and second reinforcing rubber sheets, at least one of portions which overlap each other over the entire periphery of the first forming drum in the peripheral direction, i.e., is formed with a plurality of ridges. Thus, when a joint is made by overlapping the first and second reinforcing rubber sheet, it is possible to surely discharge air from between the sheets. As a result, air can be prevented from easily entering the pneumatic tire 10 by splitting a reinforcing rubber to form the first and second reinforcing rubber sheets.

In particular, in this embodiment, the ridges extend in the longitudinal direction of the reinforcing rubber sheets, i.e., in the peripheral direction of the first forming drum which is the overlapping direction. Thus, while the first and second reinforcing rubber sheets are made to overlap each other, and the overlapping portions are pressed and jointed together, air is sequentially discharged from between the overlapping portions. As a result, occurrence of entering of air can be more surely prevented.

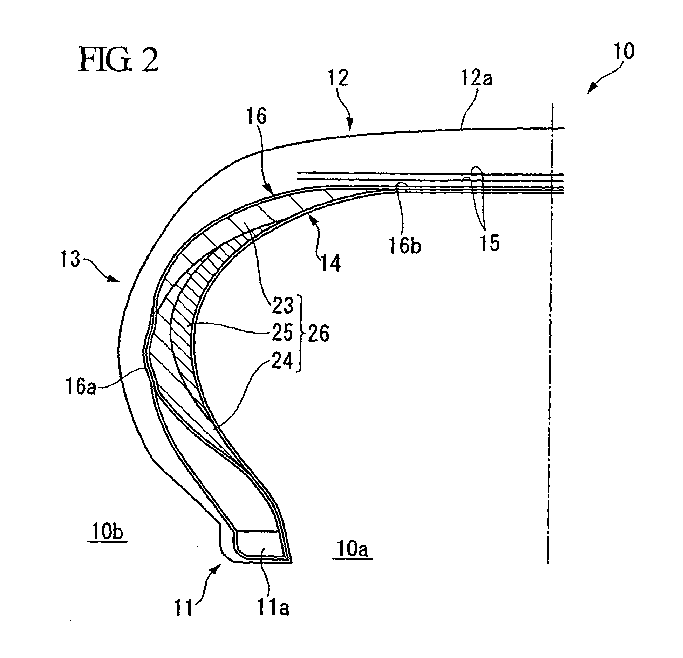

In addition, it should be understood that the technical scope of the invention is not limited to the above embodiment, but various modifications may be made without departing from the scope of the invention.
The above embodiment has showed a two-split construction including the first reinforcing rubber layer 21 arranged outside in the radial direction of the tire, and the second reinforcing rubber layer 22 arranged inside in the radial direction of the tire as the reinforcing rubber layer 17. However, the number of splitting is not limited thereto. For example, as shown in FIG. 2, a three-split reinforcing rubber layer 26 including a first reinforcing rubber layer 23 arranged outside in the radial direction of the tire, a second reinforcing rubber layer 24 arranged inside in the radial direction of the tire, and a third reinforcing rubber layer 25 arranged in the central portion in the radial direction of the tire may be adopted.

In this reinforcing rubber layer 26, a portion excluding an inner end of the second reinforcing rubber layer 24 in the radial direction of the tire, and a portion excluding an outer end of the third reinforcing rubber layer 25 in the radial direction of the tire overlap each other, and a portion excluding an outer end of the first reinforcing rubber layer 23 in the radial direction of the tire, and a portion ranging from an outer end of the third reinforcing rubber layer 25 in the radial direction of the tire to an outer end of the second reinforcing rubber layer 24 in the radial direction of the tire overlap each other. That is, an outer end of the reinforcing rubber layer 26 in the radial direction of the tire has one-layer structure composed only of the first reinforcing rubber layer 23, an inner end of the reinforcing rubber layer in the radial direction of the tire has one-layer structure composed only of the second reinforcing rubber layer 24, and a central portion of the reinforcing rubber layer in the radial direction of the tire has three-layer structure in which the third reinforcing rubber layer 25, the first reinforcing rubber layer 23, and the second reinforcing rubber layer 24 were laminated.

The reinforcing rubber layer 26 is formed as follows.
First, beltlike third reinforcing rubber sheets (the third reinforcing rubber layers 25) are respectively wound around and pasted to both axial ends of the outer peripheral surface of a cylindrical body made of an inner liner rubber sheet over its entire periphery. Then, a beltlike second reinforcing rubber sheet (second reinforcing rubber layer 24) having almost the same cross-sectional area and cross-sectional shape as each of the third reinforcing rubber sheets is shifted axially outward of the cylindrical body from the winding position of the third reinforcing rubber sheet and are wound around the outer peripheral surface of the cylindrical body such that its portion excluding the axial outer end in the width direction overlaps a portion excluding the axial inner end of the outer peripheral surface of the third reinforcing rubber sheet in the width direction over its entire periphery.

Next, a beltlike first reinforcing rubber sheet having (the first reinforcing rubber layer 23) almost the same cross-sectional area and cross-sectional shape as each of the third reinforcing rubber sheets is shifted axially inward of the cylindrical body from the winding position of the third reinforcing rubber sheet and are wound around the outer peripheral surface of the cylindrical body such that its portion excluding the axial inner end in the width direction overlaps a portion ranging from the axial inner end of the third reinforcing rubber sheet in the width direction to the axial inner end of the second reinforcing rubber sheet in the width direction over its entire periphery. Here, in each reinforcing rubber, the joint portions of the first to third reinforcing rubber sheets are arranged so as to be shifted uniformly in the peripheral direction of the cylindrical body (the first forming drum).
Then, similarly to the above embodiment, after a green case, a green tire, etc., are formed, the green tire is vulcanized, thereby forming the pneumatic tire 10.

Further, the ridges may be formed on the front and faces of the first and second reinforcing rubber sheets over their entire regions.

Next, a verification test about the operational effects described above was carried out. In this test, size was unified 225/45R18, wheel size was unified 8JJ, and air pressure was unified to 230 kPa. As working examples, the pneumatic tire 10 shown in FIG. 1 and FIG. 2 was adopted. As a comparative example, a pneumatic tire obtained by winding one reinforcing rubber sheet onto the outer peripheral surface of the cylindrical body to form a reinforcing rubber, without splitting a reinforcing rubber layer, was adopted. In the pneumatic tires of the working examples and the comparative example, all the dimensions and materials of the reinforcing rubber layer were made equal.
Also, the ride quality when a vehicle on which each of the pneumatic tires was mounted was run was evaluated by driver's feeling. As a result, when the comparative example was set to 100, the result of 120 was obtained in Working Example 1 shown in FIG. 1, and the result of 130 was obtained in Working Example shown in FIG. 2. It was thus confirmed that comfortable riding can be maintained in Working Examples 1 and 2.

### INDUSTRIAL APPLICABILITY

According to the invention, the pneumatic tire with improved run-flat durability without hindering comfortable riding can be formed while hindrances to manufacture are minimized.

## Claims

1. A manufacturing method of a pneumatic tire (10) including a pair of right and left bead parts (11), a tread part (12) arranged outside the bead parts (11) in the radial direction of a tire (10), and having a tread (12a) of the tire, and a pair of right and left sidewall parts (13) connecting both ends of the tread part (12) in the width direction and the bead parts (11),
a carcass layer (16) which extends in a toroidal shape between bead cores (11a) buried in the pair of right and left bead parts (11), respectively, being provided inside the bead parts (11), the sidewall parts (13), and the tread part (12) over these respective parts, a belt layer (15) being provided between a crown portion (16b) of the carcass layer (16), and the tread (12a), and a reinforcing rubber (17, 26) having a crescent cross-section being provided at the inside of the carcass layer (16) in the width direction of a tire (10) in each of the pair of right and left sidewall parts (13),
wherein the reinforcing rubber (21, 22, 23, 24, 25) which constitutes a reinforcing rubber layer (17, 26) in the pneumatic tire (10) is formed by winding a plurality of beltlike reinforcing rubber sheets (21, 22, 23, 24, 25) composed of the same rubber material adapted to have almost the same cross-sectional area and cross-sectional shape around a forming drum over its entire periphery while being shifted in the axial direction of the forming drum such that at least portions thereof in the width direction overlap each other over the whole periphery of the forming drum and by separately jointing both longitudinal ends of the respective reinforcing rubber sheets (21, 22, 23, 24, 25).

2. The manufacturing method of a pneumatic tire (10) according to Claim 1, wherein the plurality of reinforcing rubber sheets (21, 22, 23, 24, 25) are wound around the forming drum such that joint portions in the respective reinforcing rubber sheets are shifted uniformly in the peripheral direction of the forming drum in the reinforcing rubber constituted by the reinforcing rubber sheets.

3. The manufacturing method of a pneumatic tire (10) according to Claim 1 or 2, wherein a plurality of ridges are formed at least in the overlapping portion in the reinforcing rubber sheets (21, 22, 23, 24, 25).

4. A pneumatic tire formed by the manufacturing method of a pneumatic tire according to any one of Claims 1 to 3.

5. The pneumatic tire according to Claim 4,
wherein the shore A hardness of the reinforcing rubber layer is 70° or more and 85° or less.

## Patentansprüche

1. Verfahren zur Herstellung eines Luftreifens (10), der Folgendes einschließt: ein Paar aus einem rechten und einem linken Wulstteil (11), einen Laufflächenteil (12), der in der Radialrichtung eines Reifens (10) außerhalb der Wulstteile (11) angeordnet ist und eine Lauffläche (12a) des Reifens hat, und ein Paar aus einem rechten und einem linken Seitenwandteil (13), welche die beiden Enden des Laufflächenteils (13) in der Breitenrichtung und die Wulstteile (11) verbinden,
eine Karkassenlage (16), die sich in einer kreisringförmigen Gestalt zwischen in dem Paar aus einem rechten und einem linken Wulstteil (11) jeweils eingebetteten Wulstkernen (11a) erstreckt, die innerhalb der Wulstteile (11), der Seitenwandteile (13) und des Laufflächenteils (12) über diesen jeweiligen Teilen bereitgestellt wird, eine Gürtellage (15), die zwischen einem Scheitelabschnitt (16b) der Karkassenlage (16) und der Lauffläche (12a) bereitgestellt wird, und einen Verstärkungsgummi (17, 26) mit einem halbmondförmigen Querschnitt, der in der Breitenrichtung eines Reifens (10) an der Innenseite der Karkassenlage (16) in jedem des Paares aus einem rechten und einem linken Seitenwandteil (13) bereitgestellt wird,
wobei der Verstärkungsgummi (21, 22, 23, 24, 25), der in dem Luftreifen (10) eine Verstärkungsgummilage (17, 26) darstellt, geformt wird durch das Wickeln mehrerer gürtelartiger Verstärkungsgummibahnen (21, 22, 23, 24, 25), die aus dem gleichen Gummimaterial zusammengesetzt sind, dafür eingerichtet, nahezu die gleiche Querschnittsfläche und Querschnittsform zu haben, um eine Formtrommel um deren gesamten Umfang, während sie in der Axialrichtung der Formtrommel verschoben werden derart, dass wenigstens Abschnitte derselben in der Breitenrichtung einander über den gesamten Umfang der Formtrommel überlappen, und durch das gesonderte Zusammenfügen der beiden Längsenden der jeweiligen Verstärkungsgummibahnen (21, 22, 23, 24, 25).

2. Verfahren zur Herstellung eines Luftreifens (10) nach Anspruch 1, wobei die mehreren Verstärkungsgummibahnen (21, 22, 23, 24, 25) derart um die Formtrommel gewickelt werden, dass die Fugenabschnitte der jeweiligen Verstärkungsgummibahnen in dem Verstärkungsgummi, der durch die Verstärkungsgummibahnen dargestellt wird, in der Umfangsrichtung der Formtrommel verschoben sind.

3. Verfahren zur Herstellung eines Luftreifens (10) nach Anspruch 1 oder 2, wobei wenigstens in dem überlappenden Abschnitt in den Verstärkungsgummibahnen (21, 22, 23, 24, 25) mehrere Stege geformt werden.

4. Luftreifen, geformt durch das Verfahren zur Herstellung eines Luftreifens nach einem der Ansprüche 1 bis 3.

5. Luftreifen nach Anspruch 4,
wobei eine Shore-A-Härte der Verstärkungsgummilage 70° oder mehr und 85° oder weniger beträgt.

## Revendications

1. Procédé de production d'un bandage pneumatique (10), englobant une paire de parties de talon de droite et de gauche (11), une partie de bande de roulement (12), agencée vers l'extérieur des parties de talon (11), dans la direction radiale d'un bandage pneumatique (10), et comportant une bande de roulement (12a) du bandage pneumatique, et une paire de parties de flanc de droite et de gauche (13) connectant les deux extrémités de la partie de bande de roulement (12), dans la direction de la largeur, et des parties de talon (11) ;
une couche de carcasse (16), s'étendant dans une forme toroïdale entre des tringles (11a) noyées respectivement dans la paire de parties de talon de droite et de gauche (11), étant agencée à l'intérieur des parties de talon (11), des parties de flanc (13) et de la partie de bande de roulement (12) au-dessus de ces parties respectives, une couche de ceinture (15) étant agencée entre une partie de sommet (16b) de la couche de carcasse (16) et la bande de roulement (12a) ; et une gomme de renforcement (17, 26) ayant une section transversale en forme de croissant étant agencée au niveau de la partie interne de la couche de carcasse (16), dans la direction de la largeur d'un bandage pneumatique (10), dans chaque partie de la paire de parties de flanc de droite et de gauche (13) ;
la gomme de renforcement (21, 22, 23, 24, 25), constituant une couche de gomme de renforcement (17, 26) dans le bandage pneumatique (10) étant formée en enroulant plusieurs feuilles de gomme de renforcement en forme de bande (21, 22, 23, 24, 25), composées du même matériau de gomme adapté pour avoir pratiquement la même surface de section transversale et la même forme de section transversale, autour d'un tambour de formage, au-delà de l'ensemble de sa périphérie, tout en les décalant dans la direction axiale du tambour de formage, de sorte qu'au moins des parties de celles-ci se chevauchent mutuellement dans la direction de la largeur, au-delà de l'ensemble de la périphérie du tambour de formage, les deux extrémités longitudinales des feuilles de gomme de renforcement respectives (21, 22, 23, 24, 25) étant reliées séparément.

2. Procédé de production d'un bandage pneumatique (10) selon la revendication 1, dans lequel les plusieurs feuilles de gomme de renforcement (21, 22, 23, 24, 25) sont enroulées autour du tambour de formage, de sorte que les parties reliées dans les feuilles de gomme de renforcement respectives sont décalées de manière uniforme dans la direction périphérique du tambour de formage dans la gomme de renforcement constituée par les feuilles de gomme de renforcement.

3. Procédé de production d'un bandage pneumatique (10) selon les revendications 1 ou 2, dans lequel plusieurs nervures sont formées au moins dans la partie à chevauchement dans les feuilles de gomme de renforcement (21, 22, 23, 24, 25).

4. Bandage pneumatique formé par le procédé de production d'un bandage pneumatique selon l'une quelconque des revendications 1 à 3.

5. Bandage pneumatique selon la revendication 4,
dans lequel la dureté Shore A de la couche de gomme de renforcement est comprise entre 70° ou plus et 85° ou moins.
